# DEMANDE DE BREVET EUROPEEN

(11) **EP 3 705 193 A1**
(43) Date de publication de la demande: **09.09.2020**
(21) Numéro de dépôt: 20156807.8
(22) Date de dépôt: 12.02.2020
(51) Int. Cl.: B07B 1/15, B07B 1/46, A23N 15/02, A01D 46/28

(54) **TABLE DE TRI DES BAIES, NOTAMMENT DE RAISINS, DE DÉCHETS VÉGÉTAUX**

(30) Priorité: 12.02.2019 FR 1901404
(71) Demandeur: Socma, 11100 Narbonne (FR)
(72) Inventeur: FERRANDEZ, Sylvain, 11100 NARBONNE (FR); FERRANDEZ, Rémi, 11100 NARBONNE (FR)
(74) Mandataire: Rhein, Alain

(57) **Abrégé**

L'invention concerne une table de tri 1 pour trier, après égrappage ou égrenage, des baies, notamment de raisins, de déchets végétaux, comprenant au moins deux rouleaux 4 ; 4A juxtaposés et s'étendant horizontalement et transversalement à la direction de progression des baies, ces rouleaux 4 ; 4A comportant des moyens 8 de délimitation, entre eux d'ouvertures 12 successives de passage pour les baies, caractérisé par le fait qu'au moins deux rouleaux 4 ; 4A adjacents sont montés sur la table de tri 1 de manière mobile l'un par rapport à l'autre suivant une direction 17 sensiblement transversale à leur axe et l'un 4A au moins de ces deux rouleaux adjacents 4 ; 4A étant encore monté mobile sur la table de tri 1 suivant une direction sensiblement axiale 16 pour l'ajustement de la section desdites ouvertures 12, ladite table de tri 1 comportant encore des moyens de commande en translation transversale 20 d'au moins un rouleau 4 ; 4A et des moyens de commande en translation axiale 21 d'au moins un rouleau 4A, ainsi que des moyens d'asservissement 22 de ces moyens de commande en translation transversale 20 et axiale 21 pour un déplacement synchrone et/ou proportionnel d'au moins un rouleau 4A dans ces directions axiale et transversale

## Description

L'invention concerne une table de tri pour trier, après égrappage ou égrenage, des baies, notamment de raisins, de déchets végétaux, comprenant au moins deux rouleaux juxtaposés et s'étendant horizontalement et transversalement à la progression des baies, ces rouleaux comportant des moyens de délimitation, entre eux, d'ouvertures successives de passage pour les baies.

L'invention trouvera une application plus particulière dans le cadre du tri des baies de raisins pour en séparer les parties végétales après égrappage ou égrenage.

Il est courant de procéder à une récolte mécanique du raisin grâce à des machines à vendanger qui, bien qu'étant aujourd'hui de plus en plus évoluées, entraînent avec les fruits récoltés, une part importante de matières végétales, en l'occurrence des feuilles.

Si ces dernières sont généralement évacuées très en amont par des moyens simples, notamment des souffleries, le produit d'une récolte contient une part importante de baies non détachées de leur rafle imposant une opération d'égrappage. Si cette opération, pour laquelle il est fait appel à des dispositifs spécialement adaptés, permet la suppression en grande partie de ces rafles, certaines d'entre elles sont entrainées avec les baies, tout comme des feuilles et de nombreuses parties végétales longilignes, telles que pédoncules et pédicelles, queues de grappes, etc...

Si, par le passé, ces parties végétales accompagnaient les baies dans les cuves de fermentation et de macération, il a pu être constaté que ces composants étaient à l'origine de tanins contrariant certaines des qualités gustatives du vin obtenu à l'issue.

Ainsi, en éliminant ces parties végétales subsistant dans les baies récoltées, on obtient, généralement, des vins jugés de meilleure qualité et, surtout, d'une plus grande finesse.

A ce propos, il existe à l'heure actuelle des dispositifs de tri automatique plus ou moins efficaces.

Justement, parmi ces dispositifs de tri connus, si certains s'avèrent performants pour éliminer les rafles subsistantes après l'égrappage ou l'égrenage des baies, voire les feuilles, leur efficacité s'avère, souvent, bien plus contestable en matière de sélection et de tri des déchets végétaux longilignes, tels que pédoncules et pédicelles.

Ainsi, il est notamment connu par le document WO2010012936 un dispositif comportant une table de tri constituée d'une juxtaposition de rouleaux s'étendant dans un plan horizontal et transversalement à la progression des baies. Justement, cette progression des baies sur cette table de tri résulte de la rotation de ces rouleaux dans un sens identique. Par ailleurs, deux rouleaux consécutifs, délimitent, entre eux, dans le sens transversal à cette progression des baies, une succession d'ouvertures de sections adaptées pour le passage de ces dernières. Lorsque, en sortie d'égrappage et/ou d'égrenage, les baies sont déversées sur cette table, elles ont tendance, lors de leur progression sur cette dernière, à s'écouler au travers de ces ouvertures pour retomber dans une cuve de réception, voire un convoyeur d'évacuation adapté. Contrairement, les parties végétales ont, elles, tendance à rester au-dessus de cette table et à progresser le long de cette dernière sous l'impulsion de la rotation des rouleaux successifs.

Pour en revenir aux ouvertures de passage de section adaptée à celle des baies que délimitent deux rouleaux consécutifs, elles résultent de l'aménagement de manière équidistante, le long de ces rouleaux, de gorges. On comprend, que les gorges d'un arbre, si elles coïncident avec celles de l'arbre adjacent, délimitent une section d'ouverture maximale. Ces ouvertures peuvent ensuite être réduites par décalage des gorges en déplaçant axialement un rouleau par rapport à un autre adjacent.

L'ajustement de ces ouvertures ou sections de passage en fonction du tri à obtenir s'avère difficile à réaliser, car il convient la plupart du temps d'agir individuellement sur la fixation de chaque rouleau au cadre de la table de tri.

Il est cependant connu, par exemple par le document EP3058834, une table de tri comportant des rouleaux sur lesquels un mécanisme adapté permet d'ajuster simultanément et non individuellement l'écartement de ces rouleaux. Pour autant, si un tel réglage facilité permet d'intervenir sur la section des ouvertures entre rouleaux dans une direction, cette solution selon l'état de la technique ne régler pas le problème de gérer cette section dans d'une façon plus régulière, notamment dans la direction axiale de ces rouleaux et encore moins que cette section s'juste simultanément dans les deux directions.

Pourtant quand on cherche à améliorer le degré de sélection en fonction de la taille de baies comme des raisins, il est préférable que la section de passage pour ces baies soit dimensionnée au plus juste et non seulement dans une seule direction.

La présente invention se propose d'apporter une solution à ce problème.

Ainsi, l'invention concerne une table de tri pour trier, après égrappage ou égrenage, des baies, notamment de raisins, de déchets végétaux, comprenant au moins deux rouleaux juxtaposés et s'étendant horizontalement et transversalement à la direction de progression des baies, ces rouleaux comportant des moyens de délimitation, entre eux, d'ouvertures successives de passage pour les baies, caractérisée par le fait qu'au moins deux rouleaux adjacents sont montés sur la table de tri de manière mobile l'un par rapport à l'autre suivant une direction sensiblement transversale à leur axe et l'un au moins de ces deux rouleaux adjacents étant encore monté mobile sur la table de tri suivant une direction sensiblement axiale pour l'ajustement de la section desdites ouvertures, ladite table de tri comportant encore, d'une part, des moyens de réglage en position d'au moins un rouleau par rapport à un autre sous forme de moyens de commande en translation transversale d'au moins un rouleau et de moyens de commande en translation axiale d'au moins un rouleau, ainsi que, d'autre part, des moyens d'asservissement de ces moyens de commande en translation transversale et axiale pour un déplacement synchrone et/ou proportionnel d'au moins un rouleau dans ces directions axiale et transversale.

Selon une autre particularité de l'invention la table de tri comporte une pluralité de rouleaux montés sur la table de tri de manière mobile l'un par rapport à l'autre suivant une direction sensiblement transversale et, alternativement, un rouleau sur deux étant encore monté mobile sur la table de tri suivant une direction sensiblement axiale.

Les avantages découlant de la présente invention consistent en ce que grâce à des moyens de réglage uniques, il est possible d'ajuster très rapidement et de manière synchrone la section des ouvertures entre les rouleaux dans deux directions sensiblement perpendiculaires, ceci pour un tri de meilleure qualité.

D'autres caractéristiques particulières de l'invention apparaîtront au cours de la description qui va suivre se rapportant à un exemple de réalisation donné à titre indicatif et non limitatif.

La compréhension de cette description sera facilitée en se référant au dessin ci-joint dans lequel :
[Fig.1] -la figure 1 est une représentation schématisée, en plan et partielle d'une table de tri selon l'invention et dont des rouleaux sont dans une position correspondant à une section d'ouverture la plus réduite possible ;
[Fig.2] est une représentation similaire à la figure 1, des rouleaux étant dans une position correspondant à une section d'ouverture intermédiaire ;
[Fig.3] est une représentation similaire aux figures 1 et 2, des rouleaux étant dans une position correspondant à une section d'ouverture maximale ;
[Fig.4] est une représentation schématisée en perspective des moyens de réglage en position d'une partie des rouleaux de la table de tri ;
[Fig.5] est une vue schématisée et en perspective de détails de ces moyens de réglage en position, notamment des moyens de commande en translation axiale et transversale des rouleaux, ainsi que de leurs moyens d'asservissement, ceci lorsque les ouvertures sont réduites au maximum ;
[Fig.6] est une vue similaire à la figure 5, illustrant ces moyens de commande dans une position correspondant à une section intermédiaire des ouvertures de passage pour les baies.
[Fig.7] est une vue similaire aux figures 5 et 6, illustrant ces moyens de commande dans une position correspondant à une section maximale des ouvertures de passage pour les baies.

La présente invention concerne une table de tri 1 qui a pour but essentiel de trier des baies, plus particulièrement des raisins, après une opération d'égrappage ou d'égrenage dans le but de pouvoir recueillir, d'un côté, ces baies et, de l'autre, les déchets végétaux.

Une telle table de tri 1 comprend généralement une pluralité de rouleaux 2, 3, 4, 4A disposés de manière parallèle entre eux dans un même plan correspondant à ladite table de tri 1.

Ces rouleaux 2, 3, 4, 4A sont maintenus en rotation à leurs extrémités 5, 6 par l'intermédiaire de paliers 23 au niveau d'une structure 7 sensiblement en forme de cadre que comporte la table de tri 1.

S'ils sont généralement libres en rotation, tout ou partie de ces rouleaux 2, 3, 4, 4A peut être entraîné en rotation par l'intermédiaire de moyens d'entraînement adaptés.

A noter, encore, que, selon leurs configurations et/ou leurs propriétés, ces rouleaux 2 et/ou 3 et/ou 4, 4A sont susceptibles de contribuer, selon le cas, soit simplement à la progression des baies sur la table de tri 1, soit à leur triage.

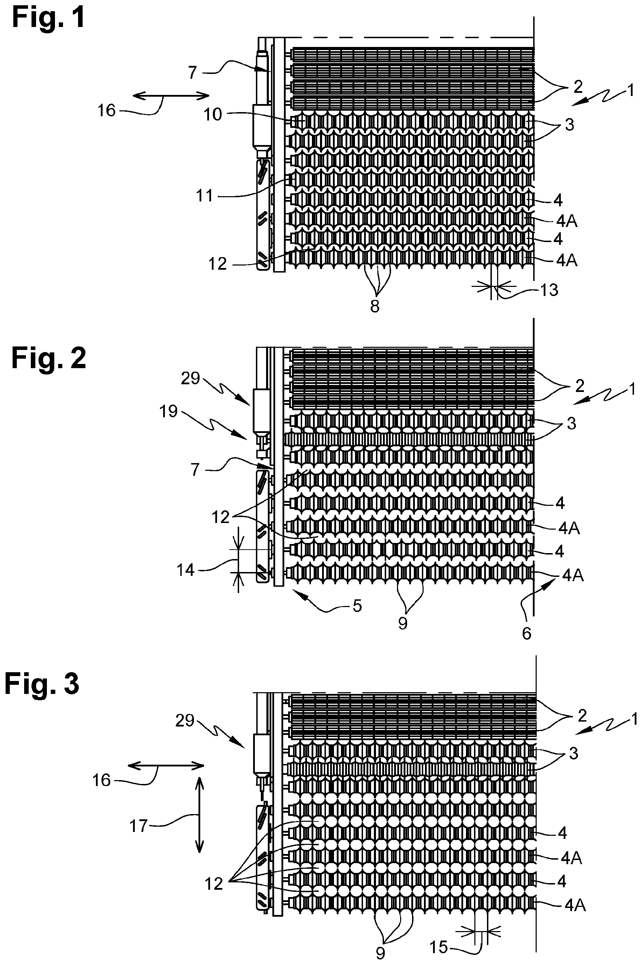

Dans la figure 1, il est visible une table de tri 1 comportant des rouleaux 2 sensiblement cylindriques sur leur longueur, n'assurant pas cette fonction de tri.

Les rouleaux 3, 4, 4A qui leur succèdent et remplissant cette fonction, comportent, avantageusement et sur une grande partie de leur longueur, une succession de gorges 8, lesquelles peuvent être définies de différentes manières. Ainsi, le long de ces rouleaux 3, 4, 4A peuvent être montés une succession de disques 9 préférentiellement équidistants les uns par rapport aux autres, deux disques 9 successifs délimitant une telle gorge 8.

Ces gorges 8 d'un rouleau 3, 4, 4A délimitent, en combinaison avec les gorges 8 d'un rouleau 3, 4, 4A immédiatement adjacent, des ouvertures 10, 11, 12 dont la section détermine la taille des baies susceptible de traverser la table de tri 1 en passant par ces ouvertures 10, 11, 12 pour les séparer des végétaux retenus au-dessus de cette table de tri 1.

Cette section des ouvertures 10, 11, 12 est dépendant, d'une part, du décalage axial des gorges 8 d'un premier rouleau 3, 4, 4A par rapport aux gorges 8 d'un rouleau 3, 4, 4A immédiatement adjacent et, d'autre part, de l'écartement 14 entre deux rouleaux 3, 4, 4A successifs.

Comme cela est visible dans la figure 1, ces ouvertures 10 sont de section réduite au minimum lorsque le décalage axial 13 d'un rouleau par rapport à un autre, adjacent, est de moitié de la largeur 15 d'une gorge 8 et que ces rouleaux adjacents sont rapprochés au maximum l'un de l'autre de sorte que les disques 9 de l'un s'engagent au plus profond possible des gorges 8 de l'autre.

Dans la figure 2, on distingue, toujours des rouleaux sensiblement cylindriques 2, des rouleaux 3 ayant conservé leur positionnement deux à deux pour maintenir entre eux des ouvertures 10 de section réduite et une pluralité de rouleaux 4, 4A dont l'écartement 14 est plus important, tandis que leur décalage axial 13 est plus réduit de sorte que les ouvertures 11 sont de section plus importante.

Au-delà de cette disposition intermédiaire, la figure 3 illustre une table de tri 1 dont, en aval des rouleaux cylindriques 2, on retrouve les rouleaux 3 délimitant entre eux des ouvertures 10 réduites et des rouleaux 4, 4A sans décalage axial et écartés au maximum de sorte que les gorges 8 d'un de ces rouleaux 4 coïncident avec les gorges 8 d'un rouleau 4A adjacent. Les ouvertures 12 sont ici de section maximale.

Selon l'invention, ce sont donc au moins deux rouleaux 4, 4A adjacents qui sont montés sur la table de tri 1 de manière mobile l'un par rapport à l'autre suivant une direction sensiblement transversale 17 par rapport à l'axe 18 de ces rouleaux 4, 4A, tandis que l'un 4A au moins est encore monté mobile sur cette table de tri dans une direction sensiblement axiale 16, ceci pour l'ajustement de la section desdites ouvertures 12 dans chacune de ces directions.

Par ailleurs, la table de tri 1 comporte encore des moyens 19 de réglage en position d'au moins un rouleau 4 par rapport à un autre rouleau 4 adjacent. Dans ce but elle comporte des moyens 20 de commande en translation transversale d'au moins un rouleau 4 ; 4A et des moyens 21 de commande en translation axiale d'au moins un rouleau 4 ; 4A, ainsi que des moyens d'asservissement 22 de ces moyens de commande en translations transversale et axiale 20, 21 pour un déplacement synchrone et/ou proportionnel d'au moins un rouleau 4A dans ces directions axiale 16 et transversale 17.

Comme cela apparaît sur les figures 1 à 3, seuls les rouleaux 4, 4A sont montés mobiles sur la table de tri 1.

Selon un mode de réalisation avantageux, les extrémités 5, 6 de ces rouleaux 4 sont montés en rotation au niveau de paliers 23 coopérant avec une glissière 24 monté sur la structure 7 de la table de tri 1 et s'étendant dans la direction transversale 17, c'est-à-dire dans le sens de flux des baies sur la table de tri 1.

De manière avantageuse, les paliers 23 sont individuellement montés coulissants dans cette glissière 24, dans cette direction transversale 17.

En somme, au travers de cette mobilité relative, les rouleaux 4, 4A sont susceptibles de se mouvoir l'un par rapport à l'autre, dans cette direction transversale 17.

Selon l'invention, les extrémités des axes des rouleaux 4, 4A, avantageusement au-delà des paliers 23, sont reliés deux à deux par des parallélogrammes 25 déformables préférentiellement de type équilatéral.

Le nombre de ces parallélogrammes déformables 25 dépendant du nombre de rouleaux 4, 4A montés mobiles dans la direction transversale 17 sur la table de tri 1 et dont l'ajustement en position intervient au travers des moyens de commande en translation transversale 20.

Par ailleurs, les différents parallélogrammes déformables 25 sont eux même reliés entre eux de manière à former une structure déformable 26 telle que le déplacement dans la direction transversale 17 d'un rouleau 4 , 4A, donc de ses paliers 23 génère un déplacement d'amplitude proportionnelle, préférentiellement identique du rouleau 4, 4A suivant et/ou précédent auquel il est relié par l'intermédiaire d'un tel parallélogramme déformable 25.

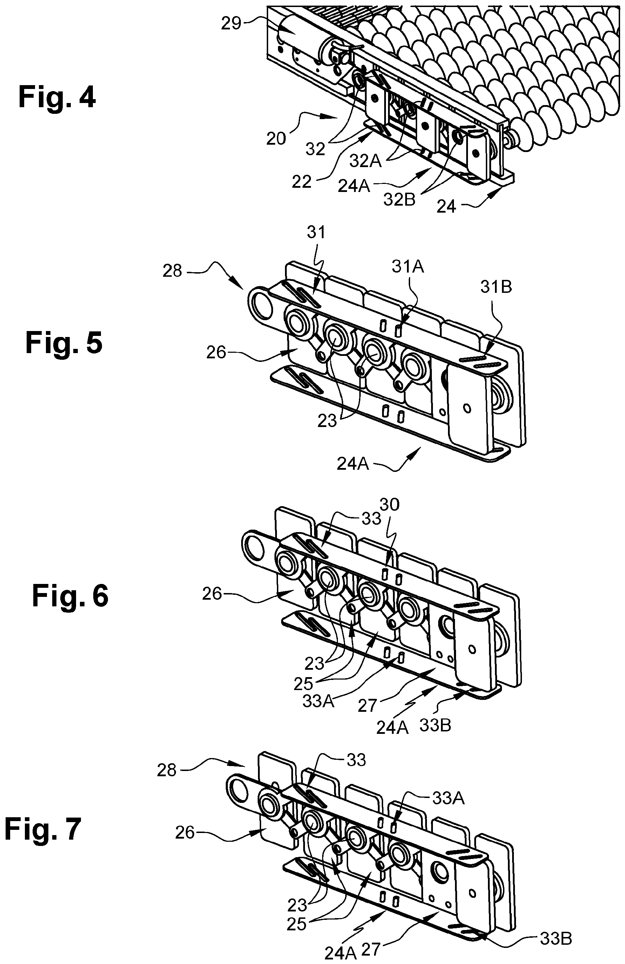

Par ailleurs, cette structure 26 est définie déformable dans la direction transversale 17 par rapport à un point fixe 27 qui peut correspondre à une extrémité de ladite structure 26 ou à un palier 23 de part et d'autre duquel s'étend cette structure 26 comme visible dans les figures 5 à 7.

Ledit point fixe 27 peut lui-même être associé à un charriot 24A mobile en translation le long de la glissière 24. Sur la structure déformable 26, avantageusement sur une extrémité 28 de cette dernière, agissent des moyens d'actionnement 29 que comportent les moyens de commande en translation transversale 20. Substantiellement, de tels moyens d'actionnement 29 peuvent se présenter sous forme d'un vérin, d'un actionneur électromagnétique, d'un système d'entraînement mécanique manuel ou à moteur...

En outre alternativement au moins un rouleau 4A sur deux est monté mobile en direction axiale 16 sur la table de tri 1. Avantageusement, la course de cette mobilité axiale correspondant au moins à environ la moitié de la largeur d'une gorge 8. Cette mobilité peut découler du libre déplacement axial du rouleau 4A dans ses paliers 23 qui le maintiennent à ses extrémités au niveau de la structure 7 de la table 1. Ainsi, ce rouleau 4A peut comporter à ses extrémités des tronçons d'axe montés en rotation dans ces paliers 23 tout en étant aptes à coulisser axialement selon la course précitée.

Au moins un de ces tronçons d'axe étant encore amené à coopérer avec un poussoir 34 interagissant avec des moyens de guidage 30 que comporte le chariot 24A, Tous deux, le poussoir 34 et lesdits moyens de guidage constituent substantiellement au moins en partie lesdits moyens de commande en translation axiale 21.

Selon un exemple de réalisation, ces moyens de guidage 30 se présentent sous forme d'au moins une lumière 31 s'étendant au moins dans cette direction axiale 16 au niveau de la structure du chariot 24A, lumière 31 avec laquelle coopère un doigt de guidage 32 venant équiper un poussoir 34.

De manière tout particulièrement avantageuse, lesdits moyens de guidage 30 constituent les moyens d'asservissement 22. Dans ce but, la lumière 31 définissant les moyens de guidage 30 s'étend suivant une direction 33 ayant une composante dans la direction axiale 16 et dans la direction transversale 17 de sorte que le déplacement du doigt de guidage 32 dans cette lumière 31 génère un déplacement du poussoir 34 dans une direction, à la fois axiale 16 et dans la direction transversale 17 du rouleau 4A relié à ce poussoir 34.

Dans le mode de réalisation illustré, le chariot 24A comporte une pluralité de lumières 31, 31a, 31b avec lesquelles coopèrent les doigts de guidage 32, 32a, 32b des poussoirs 34 associés à un rouleau 4A sur deux, c'est-à-dire aux rouleaux mobiles axialement. Les directions 33, 33a, 33b dans lesquelles s'étendent ces lumières 31, 31a, 31b se distinguent par leur composante dans la direction transversale 17, celle-ci étant dépendante de l'amplitude de déplacement à conférer à un rouleau 4 en fonction de sa position, par rapport au point fixe 27, le long de la structure déformable 26.

On comprend, en effet, qu'en fonction de la liaison des rouleaux 4 , 4A le long de cette structure déformable 26 par rapport au point fixe 27 de cette dernière, l'amplitude de leur déplacement dans la direction transversale 17 est plus ou moins amplifiée. Pour autant, dans la direction axiale 16, les rouleaux 4, mobile dans cette direction, sont soumis, avantageusement à un déplacement synchrone d'amplitude préférentiellement identique, par ailleurs sensiblement égale à la demi largeur d'une gorge 8.

A noter, à ce sujet, que l'invention n'est nullement limitée à une telle conception et on pourrait tout à fait imaginer qu'au travers des moyens d'asservissement 22, les rouleaux 4A viennent à se déplacer dans la direction axiale 16 proportionnellement à la direction de déplacement transversale 17 sans que pour autant ce déplacement dans cette direction axiale 17 d'un rouleau 4A soit strictement et nécessairement identique au déplacement correspondant d'un autre rouleau 4A.

Les avantages découlant de la présente invention consistent qu'au travers d'une simple action de poussée ou de traction exercée sur la structure à parallélogrammes déformables 26, à l'aide de moyens de commande de type manuel ou automatique, il est possible de gérer parfaitement la section des ouvertures de tri sur la table 1.

Ce réglage est non seulement facilité mais également particulièrement efficace en ce sens qu'il peut intervenir rapidement en amont d'une opération de tri ou pendant ce tri pour en améliorer l'efficacité et le rendement.

## Revendications

1. Table de tri 1 pour trier, après égrappage ou égrenage, des baies, notamment de raisins, de déchets végétaux, comprenant au moins deux rouleaux 4 ; 4A juxtaposés et s'étendant horizontalement et transversalement à la direction de progression des baies, ces rouleaux 4 ; 4A comportant des moyens 8 de délimitation, entre eux d'ouvertures 12 successives de passage pour les baies, **caractérisé par le fait qu'**au moins deux rouleaux 4 ; 4A adjacents sont montés sur la table de tri 1 de manière mobile l'un par rapport à l'autre suivant une direction 17sensiblement transversale à leur axe et l'un 4A au moins de ces deux rouleaux adjacents 4 ; 4A étant encore monté mobile sur la table de tri 1suivant une direction sensiblement axiale 16 pour l'ajustement de la section desdites ouvertures 12, ladite table de tri 1 comportant encore des moyens de commande en translation transversale 20 d'au moins un rouleau 4 ; 4A et de moyens de commande en translation axiale 21 d'au moins un rouleau 4A, ainsi que des moyens d'asservissement 22 de ces moyens de commande en translation transversale 20 et axiale 21 pour un déplacement synchrone et/ou proportionnel d'au moins un rouleau 4A dans ces directions axiale et transversale.

2. Table de tri selon la revendication 1, **caractérisée en ce que** les extrémités 5, 6 de ces rouleaux 4 ; 4A sont montés en rotation au niveau de paliers 23 individuellement coulissants dans des glissières 24 solidaires de la structure 7 de la table de tri 1 et s'étendant dans la direction transversale 17.

3. Table de tri selon la revendication 2, **caractérisée en ce que** les rouleaux 4, 4A sont reliés deux à deux à leurs extrémités par des parallélogrammes 25 déformables, eux même reliés entre eux de manière à former une structure déformable 26, telle que le déplacement dans la direction transversale 17 d'un rouleau 4, 4A génère un déplacement d'amplitude proportionnelle, du rouleau 4, 4A suivant et/ou précédent.

4. Table de tri selon la revendication 3, **caractérisée en ce que** la structure 26 est définie déformable dans la direction transversale 17 par rapport à un point fixe 27.

5. Table de tri selon la revendication 4, **caractérisée en ce que** ledit point fixe 27 est associé à un charriot 24A mobile en translation le long de la glissière 24.

6. Table de tri selon la revendication 3, **caractérisée en ce que** sur la structure déformable 26 agissent des moyens d'actionnement 29 que comportent les moyens de commande en translation transversale 20.

7. Table de tri selon la revendication 5, **caractérisée en ce qu'**un rouleau 4A mobile en direction axiale 16 sur la table de tri 1, comporte à ses extrémités des tronçons d'axe coulissant dans les paliers 23, au moins un de ces tronçons d'axe étant encore amené à coopérer avec un poussoir 34 interagissant avec des moyens de guidage 30 que comporte le chariot 24A et constituant les moyens de commande en translation axiale 21.

8. Table de tri selon la revendication 7, **caractérisée en ce que** les moyens de guidage 30 se présentent sous forme d'au moins une lumière 31 s'étendant suivant une direction 33 ayant une composante dans la direction axiale 16 et dans la direction transversale 17, lumière 31 avec laquelle coopère un doigt de guidage 32 venant équiper le poussoir 34.

9. Table de tri selon la revendication 8, **caractérisée en ce que** le chariot 24A comporte une pluralité de lumières 31, 31a, 31b avec lesquelles coopèrent les doigts de guidage 32, 32a, 32b des poussoirs 34 associés à chacun des rouleaux 4A mobile axialement.
